# EUROPÄISCHE PATENTSCHRIFT

(11) **EP 3 146 290 B1**
(45) Veröffentlichungstag und Bekanntmachung des Hinweises auf die Patenterteilung: **01.04.2020**
(21) Anmeldenummer: 15750631.2
(22) Anmeldetag: 13.05.2015
(51) Int. Cl.: G01B 11/24, G01M 11/02

(54) **VORRICHTUNG, VERFAHREN UND COMPUTERPROGRAMM ZUR GEOMETRISCHEN VERMESSUNG EINES OBJEKTS**
DEVICE, METHOD AND COMPUTER PROGRAM FOR GEOMETRICALLY MEASURING AN OBJECT
DISPOSITIF, PROCÉDÉ ET PROGRAMME D'ORDINATEUR DE MESURE DE LA GÉOMÉTRIE D'UN OBJET

(30) Priorität: 19.05.2014 DE 102014007203
(43) Veröffentlichungstag der Anmeldung: 29.03.2017
(73) Patentinhaber: TAYLOR HOBSON LIMITED, Leicester LE4 9JQ (GB)
(72) Erfinder: MAY, Thilo, 64283 Darmstadt (DE); AM WEG, Christian, 64289 Darmstadt (DE); BERGER, Gernot, 65187 Wiesbaden (DE); NICOLAUS, Ralf, 64293 Darmstadt (DE); PETTER, Jürgen, 64347 Griesheim (DE)
(74) Vertreter: Weilnau, Carsten
(86) Internationale Anmeldenummer: PCT/EP2015/000985
(87) Internationale Veröffentlichungsnummer: WO 2015/176805

(56) Entgegenhaltungen:
- DE-A1- 19 827 788
- JP-A- 2006 125 893
- US-A- 6 072 569
- US-A1- 2008 175 471
- US-A1- 2010 231 923
- US-A1- 2013 308 139

## Beschreibung

### Technisches Gebiet

Die vorliegende Erfindung betrifft eine Vorrichtung zur geometrischen Vermessung eines Objekts, insbesondere von optischen Komponenten, wie zum Beispiel Linsen. Die Erfindung betrifft zudem ein dementsprechendes Verfahren sowie ein Computerprogramm zur geometrischen Vermessung derartiger Objekte.

### Hintergrund

Zur Qualitätssicherung als auch zur Überwachung von industriellen Herstellungsprozessen, insbesondere im Bereich der Feinwerktechnik, Optik sowie in der Fertigungstechnik mechanischer und elektrischer Mikrostrukturen, besteht ein wachsender Bedarf hinsichtlich hochauflösender und präziser Vermessungen von Werkstücken oder allgemein von Objekten.

So ist aus der DE 10 2011 011 065 B4 eine Vorrichtung zur Vermessung zumindest eines Oberflächenabschnitts eines auf einem Träger gelagerten Objekts bekannt.

Die Vorrichtung weist dabei ein gegenüber dem Träger fixierbares Referenzobjekt und einen in zumindest einer ersten Richtung gegenüber dem Referenzobjekt beweglichen Halter auf. An dem Halter sind ein Referenzkörper sowie ein Abstandssensor angeordnet, die relativ zueinander drehbar gelagert sind. Der Abstandsmesser ist dabei dazu ausgebildet, einen ersten Abstand zu einem ersten Punkt des Oberflächenabschnitts des Objekts und einen zweiten Abstand zu einem hiermit korrespondierenden zweiten Punkt des Referenzkörpers zu bestimmen. Der Abstandsmesser weist dabei einen ersten, dem Objekt zugewandten Abstandssensor und einen zweiten, dem Referenzkörper zugewandten Abstandssensor auf. Diese sind dabei diametral entgegengesetzt zueinander ausgerichtet.

Mit einer derartigen Vorrichtung kann die Oberfläche eines Objekts hochpräzise und berührungslos optisch abgetastet bzw. gescannt werden. US 2010/231923 A1, US 2008/175471 A1, DE 198 27 788 A1, US 6 072 569 A, US 2013/308139 A1 und JP 2006 125893 A offenbaren die geometrische Vermessung eines Objekts.

Die Vermessung der Dicke, insbesondere eines Dickenverlaufs oder Dickenprofils Verlaufs über die Oberfläche eines planaren oder gekrümmt ausgestalteten Objekts sowie die Bestimmung des sogenannten Keilfehlers von Linsen ist mit einer derartigen Vorrichtung jedoch nicht möglich.

Der vorliegenden Erfindung liegt insoweit die Aufgabe zugrunde, eine Vorrichtung, ein Verfahren sowie ein Computerprogramm zur geometrischen Vermessung eines Objekts bereitzustellen, die insbesondere eine Dickenmessung sowie die Bestimmung eines Keilfehlers eines Objekts, typischerweise einer optischen Linse ermöglichen. Die Vorrichtung soll eine hochpräzise Objektvermessung ermöglichen. Sie soll sich ferner durch einen möglichst kompakten und vergleichsweise preiswerten Aufbau auszeichnen.

### Erfindung und vorteilhafte Ausgestaltungen

Diese Aufgabe wird mit einer Vorrichtung gemäß Patentanspruch 1, mit einem Verfahren gemäß Patentanspruch 10 sowie mit einem Computerprogramm nach Anspruch 14 gelöst. Vorteilhafte Ausgestaltungen sind dabei jeweils Gegenstand abhängiger Patentansprüche. Der Schutzbereich der Erfindung ist lediglich durch die Ansprüche definiert.

Die insoweit vorgesehene Vorrichtung ist zur geometrischen Vermessung eines an einer Trägereinrichtung gelagerten Objekts ausgebildet. Die Vorrichtung eignet sich insbesondere zur Dickenvermessung sowie zur Keilfehlerbestimmung von reflektierenden Objekten, wie zum Beispiel von Linsen. Die Vorrichtung weist eine Basis und eine daran angeordnete Trägereinrichtung zum Lagern des Objekts sowie zumindest ein gegenüber der Trägereinrichtung bzw. gegenüber der Basis fixierbares bzw. fixiertes Referenzobjekt auf.

Die Vorrichtung ist ferner mit einer Abstandsmesseinrichtung versehen, mittels welcher ein Abstand zwischen dem ortsfesten Referenzobjekt und der dem Referenzobjekt zugewandten Oberfläche des Objekts bestimmbar ist. Mittels der Abstandsmesseinrichtung ist die Oberflächenkontur des Objekts in Bezug auf das Referenzobjekt ermittelbar. Des Weiteren weist die Vorrichtung einen eine Oberseite und eine Unterseite aufweisenden Objekthalter auf. An dem Objekthalter ist das zu vermessende Objekt fixierbar. Der Objekthalter ist dabei wahlweise in einer ersten Orientierung und in einer zweiten Orientierung an der Trägereinrichtung anordenbar.

Typischerweise kann der Objekthalter mit seiner Oberseite oder mit seiner Unterseite an der Trägereinrichtung gelagert bzw. an der Trägereinrichtung fixiert werden. Die der Trägereinrichtung jeweils abgewandte Seite von Oberseite und Unterseite ist dann der Abstandsmesseinrichtung zugewandt, sodass diejenige Oberfläche des Objekts, welche der Ober- oder Unterseite des Objekthalters zugeordnet ist, in der betreffenden Orientierung des Objekthalters mittels der Abstandsmesseinrichtung abscannbar ist.

Abscannen meint hierbei das zweidimensionale punktweise Abtasten der der Abstandsmesseinrichtung zugewandten Oberfläche des zu vermessenden Objekts. Die Abstandsmesseinrichtung und der Objekthalter sind zum Abscannen der Oberfläche des Objekts relativ zueinander beweglich. Der Objekthalter weist an seiner Oberseite und an seiner Unterseite jeweils eine der Relativbewegung von Objekthalter und Abstandsmesseinrichtung korrespondierende Referenzstruktur auf.

Durch die Fixierung des Objekts am Objekthalter ist das Objekt mit seinen typischerweise gegenüberliegenden und einander abgewandten Oberflächen relativ zu den Referenzstrukturen des Objekthalters ebenfalls fixiert. Beim Abscannen beispielsweise der der Oberseite zugewandten Oberfläche des Objekts ist die typischerweise an der Oberseite des Objekthalters vorgesehene obere Referenzstruktur gleichermaßen abscannbar. Gleiches trifft für die gegenüberliegende Oberfläche des Objekts und die dementsprechend an der Unterseite des Objekthalters vorgesehene untere Referenzstruktur zu.

Mittels der am Objekthalter ausgestalteten Referenzstrukturen sind die gegenüberliegenden Oberflächen des Objekts, typischerweise in Form einer Oberseite und einer Unterseite nacheinander und jeweils zusammen mit den objekthalterseitigen Referenzstrukturen abscannbar. Im so erzeugten Abbild der Oberfläche ist somit inhärent zumindest ein Teil der der betreffenden Oberfläche zugeordneten Referenzstruktur enthalten. Die Referenzstruktur ist im Abbild der abgescannten Oberfläche identifizierbar. Die sequenziell und nacheinander durchgeführten Scannprozesse gegenüberliegender Oberflächen des Objekts und die hierbei erzeugten Oberflächenabbbilder können mittels der jeweils an der Oberseite und der Unterseite des Objekthalters ausgebildeten Referenzstrukturen zueinander in Bezug gesetzt werden.

Insbesondere die Lage und die wechselseitige Ausrichtung der nacheinander ermittelbaren Oberflächenabbilder der gegenüberliegenden Oberflächen des Objekts können auf diese Art und Weise rechnerisch einander zugeordnet und zumindest zur virtuellen dreidimensionalen Nachbildung des Objekts zueinander in Bezug gesetzt werden. Eine zumindest virtuelle Zuordnung der gegenüberliegenden Oberflächenabbilder des Objekts ermöglicht eine Konturermittlung sowie Dickenbestimmung des Objekts. Ferner ist mittels des mit zumindest zwei Referenzstrukturen versehenen Objekthalters auch ein Keilfehler des Objekts präzise ermittelbar.

Die Abstandsmesseinrichtung ist als optische und somit berührungslose Abstandsmesseinrichtung ausgestaltet. Nicht erfindungsgemäss kann die Abstandsmesseinrichtung auch gleichermaßen als taktile Abtasteinrichtung ausgestaltet sein.

Das Abscannen der Oberfläche des Objekts kann auf vielerlei Arten und Weisen erfolgen. Es ist denkbar, dass das Objekt in Bezug auf das Referenzobjekt in Ruhe bleibt, während die Abstandsmesseinrichtung eine der Geometrie bzw. Oberflächenkontur des Objekts entsprechende zumindest zwei- oder sogar dreidimensionale Scannbewegung relativ zum Objekt bzw. relativ zur Trägereinrichtung durchführt. Es ist natürlich auch umgekehrt denkbar, dass die Abstandsmesseinrichtung in Bezug das Referenzobjekt in Ruhe ist und dass eine Relativbewegung von Abstandsmesseinrichtung und Objekt allein durch eine entsprechende Bewegung des Objekthalters relativ zur Abstandsmesseinrichtung erfolgt. Vorrichtungs- als auch messtechnisch von Vorteil erweist sich allerdings eine kombinierte Ausgestaltung, bei welcher sowohl die Abstandsmesseinrichtung als auch das Objekt einer definierten Bewegung gegenüber dem Referenzobjekt unterliegen.

Nach einer Weiterbildung der Erfindung weist der Objekthalter außerhalb eines Aufnahmebereichs für das Objekt an seiner Oberseite eine obere Referenzstruktur und ebenfalls außerhalb des Aufnahmebereichs für das Objekt an seiner Unterseite eine untere Referenzstruktur auf. Der Aufnahmebereich für das Objekt kann eine Durchgangsöffnung aufweisen, in welcher beispielsweise das in Form einer optischen Linse ausgestaltete Objekt lösbar anordenbar ist. Im oder am Aufnahmebereich ist das Objekt typischerweise mit einer Oberseite zur Oberseite des Objekthalters ausgerichtet. Mit einer Unterseite ist das Objekt ferner mit der Unterseite des Objekthalters ausgerichtet und dementsprechend am Objekthalter angeordnet. Auf diese Art und Weise kann die Oberseite des Objekts zusammen mit der oberen Referenzstruktur abgescannt und dessen Kontur ermittelt werden. Gleichermaßen gilt dies auch für die Unterseite des Objekts und die der Objektunterseite zugeordneten unteren Referenzstruktur.

Nach einer weiteren Ausgestaltung ist die obere Referenzstruktur zusammen mit der an der Oberseite des Objekthalters vorgesehenen Oberfläche des Objekts und die untere Referenzstruktur zusammen mit der an der Unterseite des Objekthalters vorgesehenen Oberfläche des Objekts abscannbar. Objektoberseite und Objektunterseite können je nach Orientierung des Objekthalters an der Trägereinrichtung mit der jeweiligen oberen bzw. unteren Referenzstruktur abgescannt werden.

Das Abscannen der oberen oder unteren Referenzstruktur zusammen mit der Oberseite oder Unterseite des Objekts bedeutet nicht zwangsläufig ein gleichzeitiges Abscannen. Es ist durchaus möglich, dass in ein und demselben Scannvorgang zunächst zum Beispiel die obere Referenzstruktur und dann die jener Referenzstruktur zugeordnete oberseitige Oberfläche des Objekts abgescannt wird. Alsdann ist in einem nachfolgenden Schritt der Objekthalter aus der ersten Orientierung in die zweite Orientierung zu überführen, bevor in einem nachfolgenden Scannvorgang gleichermaßen die entsprechende untere Referenzstruktur und die Unterseite des Objekts entweder gleichzeitig oder sequenziell abgescannt werden. Da zwischen einem Abscannen der Referenzstruktur und der zugehörigen Oberfläche des Objekts keinerlei Umorientierung des Objekthalters erfolgt, ist das so gewonnene Oberflächenabbild stets in Bezug zur betreffeden Referenzstruktur gesetzt.

Da die Beziehung der beiden Referenzstrukturen zueinander bekannt ist oder durch Kalibrierung ermittelbar ist, kann durch eine Zuordnung der den oberen und unteren Referenzstrukturen entsprechenden Bereichen innerhalb eines oberen und eines unteren Oberflächenabbilds des Objekts eine wechselseitige und präzise Zuordnung der gegenüberliegenden Oberflächenabbilder des Objekts erfolgen. Aus dieser Zuordnung sind diverse geometrische Größen sowie Charakteristika des Objekts, wie zum Beispiel die Dicke, das Dickenprofil als auch ein Keilfehler des Objekts bestimmbar.

Nach einer weiteren Ausgestaltung weist die Vorrichtung eine Steuerung auf, mittels welcher die einander gegenüberliegenden an Oberseite und Unterseite des Objektträgers vorgesehenen und mittels der Abstandsmesseinrichtung abgescannten Oberflächen des Objekts mittels der mit den Objektoberflächen abgescannten oberen und unteren Referenzstrukturen einander zuordenbar sind.

Die Steuerung ist insbesondere computerimplementiert ausgestaltet. Die Steuerung kann zum einen die Relativbewegung zwischen Abstandsmesseinrichtung und dem zu vermessenden Objekt und damit ein Abscannen der Objektoberflächen steuern. Zudem kann die Steuerung die mittels der Abstandsmesseinrichtung ermittelbaren Oberflächenabbilder elektronisch verarbeiten und durch Identifikation der Referenzstrukturen in den so gewonnenen Oberflächenabbildern auch eine wechselseitige Zuordnung der Oberflächenabbilder sowie hieraus abzuleitende Daten und geometrische Parameter bestimmen.

Mittels der Steuerung kann das Messverfahren nahezu vollautomatisch und/oder programmgesteuert ablaufen.

Nach einer weiteren Ausgestaltung weist der Objekthalter zwischen seiner Oberseite und seiner Unterseite eine von außen zugängliche äußere Referenzstruktur auf. Die äußere Referenzstruktur erstreckt sich, wie auch die obere und die untere Referenzstruktur, bevorzugt korrespondierend zur zwischen Objekthalter und Abstandsmesseinrichtung vorgesehenen Relativbewegung. Während mit den an Ober- und Unterseite vorgesehenen oberen und unteren Referenzstrukturen eine Referenzierung des am Objekthalter angeordneten Objekts hinsichtlich des Abstands zur Abstandsmesseinrichtung erfolgt, kann mittels der äußeren Referenzstruktur eine weitere Referenzierung im Hinblick auf die Relativbewegung von Objekthalter und Abstandsmesseinrichtung während eines Scannvorgangs bereitgestellt werden.

Bei einer Vermessung eines an der Trägereinrichtung drehbar gelagerten Objekts ist eine derartige Referenzierung mittels der äußeren Referenzstruktur, insbesondere bei nicht rotationssymmetrischen Objekten, von besonderer Bedeutung. Insbesondere können hierdurch laterale Verschiebungen virtueller Oberflächenabbilder, das heißt Verschiebungen senkrecht zur Drehachse des sich beim Abscannen drehenden Objekts kompensiert werden.

Nach einer weiteren Ausgestaltung ist die Abstandsmesseinrichtung relativ zu zumindest einem von Referenzobjekt und Trägereinrichtung in einer Ebene (x, z) beweglich. Jene Ebene bildet typischerweise die Messebene, in welcher die Abstandsmesseinrichtung relativ zur Trägereinrichtung und somit auch relativ zum Objekt als auch relativ zu dem zumindest einen ortsfesten Referenzobjekt beweglich ist. Typischerweise können zwei Referenzobjekte beabstandet zueinander vorgesehen sein, mittels derer eine Positionsbestimmung der Abstandsmesseinrichtung in der Ebene relativ zu den beiden zueinander fixierten Referenzobjekten erfolgen kann. Entsprechend der konkreten geometrischen Ausgestaltung des zu vermessenden Objekts ist auch eine nur eindimensionale, etwa translatorische Beweglichkeit der Abstandsmesseinrichtung relativ zum Referenzobjekt bzw. relativ zur Trägereinrichtung denkbar.

Eine Beweglichkeit der Abstandsmesseinrichtung in einer Ebene verleiht der Vorrichtung ein hohes Maß an Flexibilität. Die zweidimensionale Beweglichkeit der Abstandsmesseinrichtung ermöglicht einen universellen und vielseitigen Einsatz für die geometrische Vermessung unterschiedlichster Objekte.

Nach einer weiteren Ausgestaltung ist der Objekthalter drehbar an der Trägereinrichtung gelagert. Die Drehachse des Objekthalters liegt hierbei typischerweise in der Messebene der Abstandsmesseinrichtung oder sie erstreckt sich parallel zur Messebene. Eine drehbare Lagerung des Objekthalters an der Trägereinrichtung ist insbesondere für das Vermessen rotationssymmetrischer Objekte in messtechnischer Hinsicht von Vorteil. Ein sich an der Trägereinrichtung drehendes Objekt kann von der Abstandsmesseinrichtung radial von außen nach innen oder von innen nach außen während der Drehbewegung des Objekts abgetastet bzw. berührungslos abgescannt werden.

Nach einer weiteren oder alternativen Ausgestaltung ist ferner denkbar, dass der Objekthalter linear translatorisch an der Trägereinrichtung gelagert ist. Die Translationsbewegung des Objekthalters erstreckt sich hierbei typischerweise senkrecht oder unter einem vorgegebenen Winkel zur Messebene der Abstandsmesseinrichtung. Eine derart translatorische Lagerung des Objekts an der Trägereinrichtung erweist sich insbesondere für ein schrittweises Abscannen oder Abtasten von Objekten mit einer Zylindersymmetrie, beispielsweise von Zylinderlinsen, als vorteilhaft. Hierbei kann insbesondere vorgesehen werden, die Längsachse des zu vermessenden Objekts in Richtung der Translationsachse der Trägereinrichtung auszurichten und das Objekt dementsprechend am Objekthalter anzuordnen.

Nach einer weiteren Ausgestaltung weist die Abstandsmesseinrichtung einen gegenüber dem Referenzobjekt beweglichen Halter auf, an welchem ein Referenzkörper, ein erster Abstandssensor und ein zweiter Abstandssensor angeordnet sind. Der erste und der zweite Abstandssensor sind dabei relativ zum Referenzkörper drehbar gelagert. Die drehbare Lagerung der Abstandssensoren ist insbesondere zum Einstellen einer Orthogonalitätsbedingung in Bezug auf die zu vermessende Objektoberfläche von Vorteil.

Um insbesondere den Abstand zwischen der Abstandsmesseinrichtung bzw. einem ihrer Abstandssensoren und der zu vermessenden Oberfläche des Objekts präzise ermitteln zu können, muss der betreffende Sensor im Wesentlichen orthogonal zur zu vermessenden Oberfläche ausgerichtet sein und seine Ausrichtung entsprechend der Kontur des zu vermessenden Objekts anpassen. Für diese Anpassung sind sowohl Translations- als auch Drehbewegungen des Sensors durchzuführen. Während die Translationsbewegungen und Position des Abstandssensors im Raum mittels zumindest eines weiteren am Halter angeordneten und zum Referenzobjekt hin ausgerichteten Abstandssensors gegenüber dem zumindest einen Referenzobjekt mit ausreichend hoher Genauigkeit problemlos ermittelbar ist, erweist sich ein Drehen bzw. Verkippen des Sensors in messtechnischer Hinsicht als problematisch.

Das Vorsehen eines am beweglichen Halter angeordneten Referenzkörpers erweist sich für eine präzise Abstandsbestimmung trotz schwenkbarer Lagerung des Abstandssensors überaus vorteilhaft, wie dies in der DE 10 2011 011 065 B4 bereits beschrieben ist.

Typischerweise sind der erste und der zweite Abstandssensor starr zueinander angeordnet. Der erste Abstandssensor ist im Betrieb der Vorrichtung auf die zu vermessende Oberfläche des Objekts gerichtet, während der zweite Abstandssensor typischerweise diametral entgegengesetzt dem Referenzkörper zugewandt ist. Der Referenzkörper weist eine der Drehbewegung der beiden Abstandssensoren korrespondierende und systemweit bekannte bzw. zuvor mittels Kalibrierung ermittelte Referenzfläche auf, sodass mittels der beiden diametral entgegengesetzt ausgerichteten ersten und zweiten Abstandssensoren der Abstand eines ausgewählten Punkts auf der zu vermessenden Oberfläche des Objekts relativ zum Referenzkörper des Halters der Messeinrichtung bestimmbar ist.

Der Halter selbst ist mittels zumindest des bereits genannten weiteren Abstandssensors hinsichtlich seiner Position gegenüber dem zumindest einen Referenzobjekt im Raum referenziert. Seine Lage ist mittels eines oder mehrerer ergänzender Abstandssensoren in Bezug auf das zumindest eine bzw. in Bezug auf mehrere Referenzobjekte präzise bestimmbar.

Die Referenzfläche des Referenzkörpers des Halters kann beispielsweise als Hohlspiegel mit einer im Wesentlichen kreissegmentartigen Geometrie ausgestaltet sein. Der Mittelpunkt des Hohlspiegels kann dabei typischerweise mit der Drehachse der Abstandsmesseinrichtung, das heißt mit einer gemeinsamen Drehachse von erstem und zweiten Abstandssensor zusammenfallen.

Nach einer weiteren Ausgestaltung ist zumindest ein als dritter Abstandssensor ausgestalteter Referenzsensor am Halter, mittels welchem ein Abstand oder eine Ausrichtung des Halters relativ zum Referenzobjekt bestimmbar ist. Das Referenzobjekt weist dabei eine mit dem Abstandssensor korrespondierende, typischerweise reflektierende Referenzfläche auf.

Mittels der Abstandsmesseinrichtung ist der Abstand einzelner bzw. einer Vielzahl von Punkten der zu vermessenden Oberfläche des Objekts relativ zum Referenzkörper des Halters der Vorrichtung bzw. der Abstandsmesseinrichtung bestimmbar. Mittels des zumindest einen Referenzsensors einem weiteren zweiten, ebenfalls als Abstandssensor ausgebildeten Referenzsensors ist die Position oder Lage des Halters relativ zu dem zumindest einen oder zu mehreren Referenzobjekten präzise bestimmbar.

Die Abstandssensoren bzw. Referenzsensoren sind typischerweise mit mehreren Lichtquellen unterschiedlicher Wellenlänge gekoppelt, um den Abstand zum Objekt oder zum Referenzkörper oder Referenzobjekt mittels eines Mehrwellenlängenmessprinzips zu bestimmen. Ein derartiges Heterodyn-Messverfahren ermöglicht eine hochpräzise Abstandsmessung mit einer Auflösung im Nanometer- und Subnanometerbereich und kann ferner einen Eindeutigkeitsbereich des Messergebnisses bis in den Millimeterbereich hinein bereitstellen. Bevorzugt werden als Lichtquellen weitgehend monochromatische Laser vorgesehen, deren Wellenlänge im Bereich zwischen 1520 und 1630 nm liegt. Typischerweise liegen die verwendeten Laserwellenlängen im S-, C- oder L-Band des optischen Telekommunikationsspektrums. Es sind aber auch grundsätzlich Wellenlängen im sichtbaren und/oder UV-Spektralbereich denkbar.

Prinzipiell ist die Erfindung auch für einen mit lediglich einer Wellenlänge operierende Abstandsmesseinrichtung implementierbar. Mittels eines Mehrwellenlängen-Messverfahrens kann jedoch der Eindeutigkeitsbereich der empfangenen Signale sichtlich vergrößert werden. Die jeweilige Phase oder Phasenlage der von der Objektoberfläche reflektierten Strahlen wird wellenlängenselektiv detektiert und im Zuge einer elektronischen Auswertung zur Bestimmung des Abstandes verarbeitet.

Die Abstandssensoren können ferner faseroptisch mit den betreffenden Lichtquellen gekoppelt sein. Etwaige umweltbedingte Störeinflüsse können auf diese Art und Weise auf ein Minimum begrenzt werden.

Nach einem weiteren Aspekt betrifft die Erfindung ferner ein Verfahren zur geometrischen Vermessung eines Objekts mittels einer zuvor beschriebenen Vorrichtung. In einem ersten Schritt wird hierbei der mit einem zu vermessenden Objekt versehene Objekthalter in einer ersten Orientierung an der Trägereinrichtung der Messvorrichtung angeordnet. In einem nachfolgenden Schritt wird alsdann eine erste Oberfläche des Objekts und eine obere, typischerweise der Abstandsmesseinrichtung zugewandte Referenzstruktur des Objekthalters mittels der Abstandsmesseinrichtung abgescannt, um ein erstes Oberflächenabbild des Objekts und der zugehörigen Referenzstruktur zu erzeugen.

Hiernach wird der Objekthalter in einer zweiten, typischerweise umgekehrten Orientierung an der Trägereinrichtung angeordnet, bevor in entsprechender Art und Weise auch die zweite Oberfläche des Objekts, welcher der ersten Oberfläche gegenüberliegend angeordnet ist, und eine untere, der oberen Referenzstruktur abgewandte Referenzstruktur des Objekthalters mittels der Abstandsmesseinrichtung zur Erzeugung eines zweiten Oberflächenabbilds abgescannt werden.

Anhand der oberen und unteren Referenzstrukturen im ersten und zweiten Oberflächenabbild kann in einem nachfolgenden Schritt alsdann eine Zuordnung des ersten und des zweiten Oberflächenabbilds, mithin der in den entsprechenden Oberflächenabbildern enthaltenen, die jeweilige Oberfläche des Objekts repräsentierenden Messwerten zugeordnet werden. Aus jener Zuordnung kann eine Vielzahl geometrischer Parameter des gemessenen Objekts bestimmt werden. Insbesondere die Dicke, ein Dickenprofil über die Oberfläche des Objekts als auch ein Keilfehler des Objekts können somit präzise ermittelt und bestimmt werden.

Nach einer Weiterbildung hiervon erfolgt das Abscannen von einer von erster und zweiter Oberfläche des Objekts und von einer jeweils zugehörigen Referenzstruktur zeitlich nacheinander jeweils mit der Abstandsmesseinrichtung. Ein sequenzielles Abtasten, beispielsweise der oberen Referenzstruktur und ein sich hieran anschließendes Abscannen der Oberseite des Objekts kann mit ein und derselben Abstandsmesseinrichtung erfolgen, sodass der apparative Aufwand für die Durchführung des Verfahrens und für die Implementierung der Vorrichtung auf ein Minimum reduziert werden kann.

Es ist grundsätzlich aber auch denkbar, eine Oberfläche des Objekts zeitgleich mit einer zugeordneten Referenzstruktur des Objekthalters abzuscannen. Es ist dabei allerdings zu gewährleisten, dass entsprechende Abstandssensoren und deren Signale in einem bekannten und festen Bezug zueinander stehen.

Nach einer Weiterbildung ist vorgesehen, dass zumindest eine von oberer und unterer Referenzstruktur oder zumindest eine der Oberflächen des Objekts mit einer äußeren Referenzstruktur des Objekthalters abgescannt wird. Die äußere Referenzstruktur befindet sich an einem Außenrand oder an einer Außenseite des Objekthalters. Ein derartiges Verfahren ist insbesondere bei nicht rotationssymmetrischen Objekten von Bedeutung. Des Weiteren kann hierdurch ein etwaiger lateraler Versatz der nacheinander in unterschiedlichen Orientierungen gemessenen Oberflächenabbilder kompensiert werden. Auf diese Art und Weise können auch die Anforderungen an eine absolut exakte und mittige Lagerung des Objekts an einer Drehachse der Trägereinrichtung in vorteilhafter Weise reduziert werden.

Nach einer weiteren Ausgestaltung des Verfahrens erfolgt das Abscannen von zumindest einer Referenzstruktur und von zumindest einer Oberfläche des Objekts mit derselben Abstandsmesseinrichtung. Auf diese Art und Weise kann mittels nur einer einzige Abstandsmesseinrichtung, die typischerweise über die bereits beschriebenen zwei diametral entgegengesetzt ausgerichteten Abstandssensoren verfügt, sowohl die Referenzstruktur als auch die der Referenzstruktur jeweils zugeordnete Oberfläche des Objekts präzise vermessen werden. Der apparative Aufwand kann dabei in Grenzen gehalten werden.

Nach einer weiteren Ausgestaltung des Verfahrens wird aus einer wechselseitigen Zuordnung von erstem und zweitem Oberflächenabbild des Objekts zumindest die Dicke des Objekts und/oder ein Keilfehler des Objekts ermittelt. Die Ermittlung der Dicke und/oder des Keilfehlers erfolgt hierbei typischerweise rechnergestützt. Die Zuordnung von erstem und zweitem Oberflächenabbild erfolgt anhand der mit den jeweiligen Oberflächenabbildern aufgenommenen Referenzstrukturen, deren Lage zueinander bekannt ist oder deren Lage zueinander mittels Kalibrierung bei Inbetriebnahme der Vorrichtung bestimmt wird.

Es ist ferner anzumerken, dass die eingangs beschriebene Vorrichtung zur Durchführung des hier beschriebenen Verfahrens vorgesehen und verwendbar ist. Insoweit gelten sämtliche zur Vorrichtung angegebenen Merkmale und Vorteile gleichermaßen auch für das Verfahren; sowie umgekehrt.

Nach einem weiteren Aspekt betrifft die Erfindung ferner ein Computerprogramm, welches typischerweise in der Steuerung der bereits beschriebenen Vorrichtung abläuft. Das Computerprogramm dient insoweit zur geometrischen Vermessung eines Objekts auf der Basis einer zuvor beschriebenen Vorrichtung zum Vermessen derartiger Objekte.

Das Computerprogramm weist Programmmittel zum Abscannen einer ersten Oberfläche des Objekts und zum Abscannen einer oberen Referenzstruktur des in einer ersten Orientierung einer Trägereinrichtung angeordneten Objekthalters auf.

Die Programmmittel sind ferner zur Erzeugung eines ersten Oberflächenabbilds des Objekts ausgebildet.

Gleichermaßen sind die Programmmittel auch zum Abscannen einer zweiten Oberfläche des Objekts und einer unteren Referenzstruktur des in einer zweiten Orientierung an der Trägereinrichtung angeordneten Objekthalters ausgebildet. Die Programmmittel sind ferner zur Erzeugung eines zweiten Oberflächenabbilds des Objekts ausgestaltet. Das zweite Oberflächenabbild spiegelt eine dem ersten Oberflächenabbild abgewandte Oberfläche des zu vermessenden Objekts wider.

Das Computerprogramm verfügt ferner über Programmmittel zum Zuordnen des ersten und des zweiten Oberflächenabbilds anhand der oberen und unteren Referenzstrukturen. Das Computerprogramm ist insbesondere dazu ausgebildet, die oberen und unteren Referenzstrukturen innerhalb der gemessenen Oberflächenabbilder zu identifizieren und die Oberflächenabbilder anhand der in einem festen und bekannten Bezug zueinanderstehenden Referenzstrukturen zumindest virtuell zu überlagern. Aus jener Überlagerung ist eine hochpräzise Oberflächen- und Volumenrekonstruktion des Objekts möglich, aus welcher ein Dickenprofil über die Oberfläche des Objekts als auch ein Keilfehler des Objekts bestimmbar ist.

Es sei an dieser Stelle ferner angemerkt, dass das Computerprogramm insbesondere zur Durchführung des zuvor beschriebenen Verfahrens mit Hilfe der ebenfalls zuvor beschriebenen Vorrichtung geeignet und hierzu gesondert ausgebildet ist. Das Computerprogramm ist typischerweise in der Steuerung der Vorrichtung implementiert und ist insoweit von der Steuerung ausführbar. Das Computerprogramm kann nicht nur einer Auswertung der mittels der Abstandsmesseinrichtung ermittelbaren Oberflächenabbilder dienen, sondern kann ferner auch den Scannvorgang zur Erzeugung der Oberflächenabbilder des Objekts selbsttätig steuern.

Es ist ferner anzumerken, dass sämtliche in Bezug auf die Vorrichtung und das Verfahren beschriebenen Merkmale und Vorteile auch gleichermaßen für das hier genannte Computerprogramm gelten; und umgekehrt.

### Kurzbeschreibung der Figuren

Weitere Ziele, Merkmale sowie vorteilhafte Anwendungsmöglichkeiten werden anhand der nachfolgenden Beschreibung eines Ausführungsbeispiels unter Bezugnahme auf die Figuren erläutert. Hierbei zeigen:
- Fig. 1: eine perspektivische Darstellung der Vorrichtung zur geometrischen Vermessung von Objekten,
- Fig. 2: eine Seitenansicht der Vorrichtung gemäß Fig. 1,
- Fig. 3: eine schematische Darstellung des grundlegenden Messprinzips der Abstandsmesseinrichtung,
- Fig. 4: eine etwas detailliertere Darstellung der wechselseitigen Anordnung von Abstandsmesseinrichtung, Trägereinrichtung und Objekthalter,
- Fig. 5: eine perspektivische Darstellung des Objekthalters,

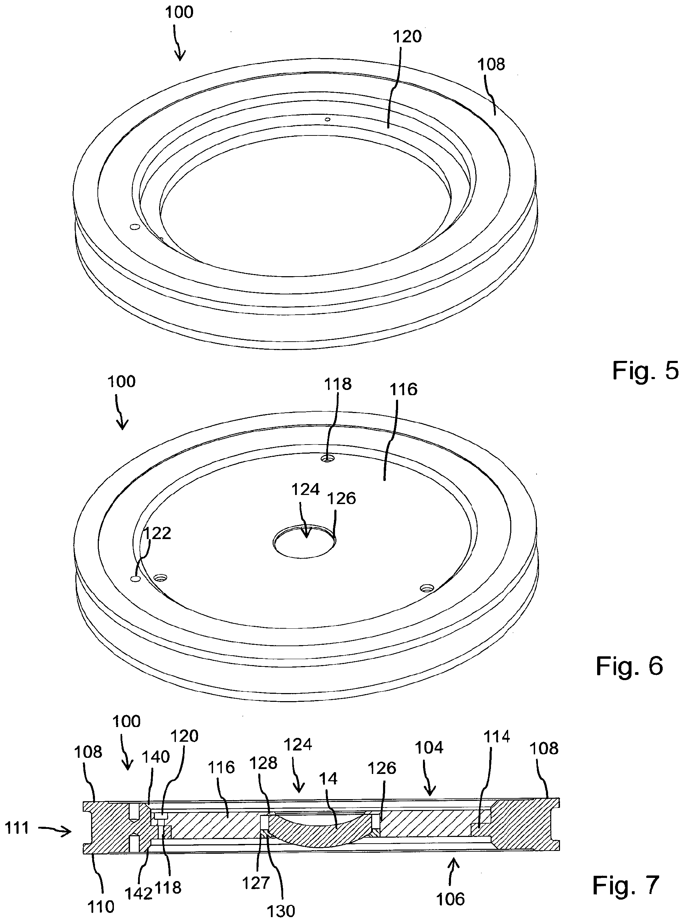

- Fig. 5: eine weitere perspektivische Darstellung des Objekthalters gemäß Fig. 5 mit einem daran angeordneten Objektträger und
- Fig. 7: einen Querschnitt durch den Objekthalter mit einer daran angeordneten Linse,

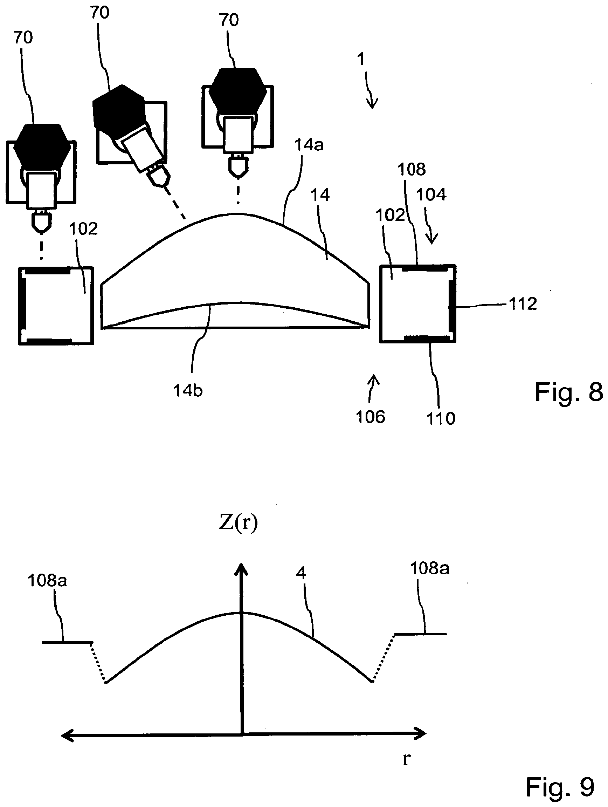

- Fig. 8: eine schematische Darstellung der Vorrichtung während der Ermittlung eines ersten Oberflächenabbilds,
- Fig. 9: eine schematische Darstellung eines ersten Oberflächenabbilds,

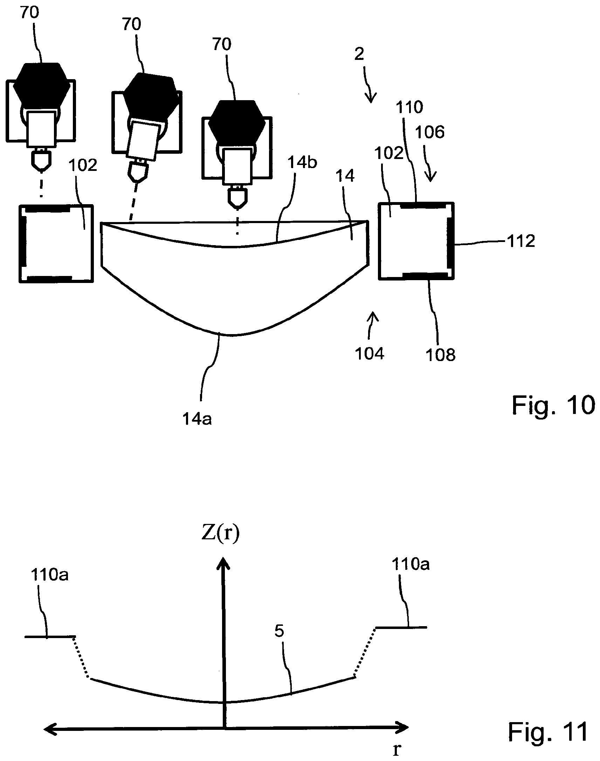

- Fig. 10: eine schematische Darstellung der Vorrichtung während der Ermittlung eines zweiten Oberflächenabbilds,
- Fig. 11: ein der Konfiguration gemäß der Fig. 10 entsprechendes zweites Oberflächenabbild,

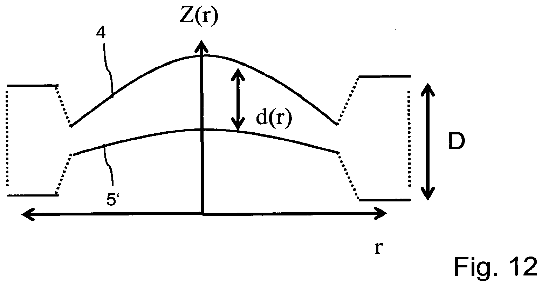

- Fig. 12: eine Superposition der in Fig. 9 und Fig. 11 dargestellten Oberflächenbilder, jedoch mit dem zweiten Oberflächenabbild vertikal gespiegelt,

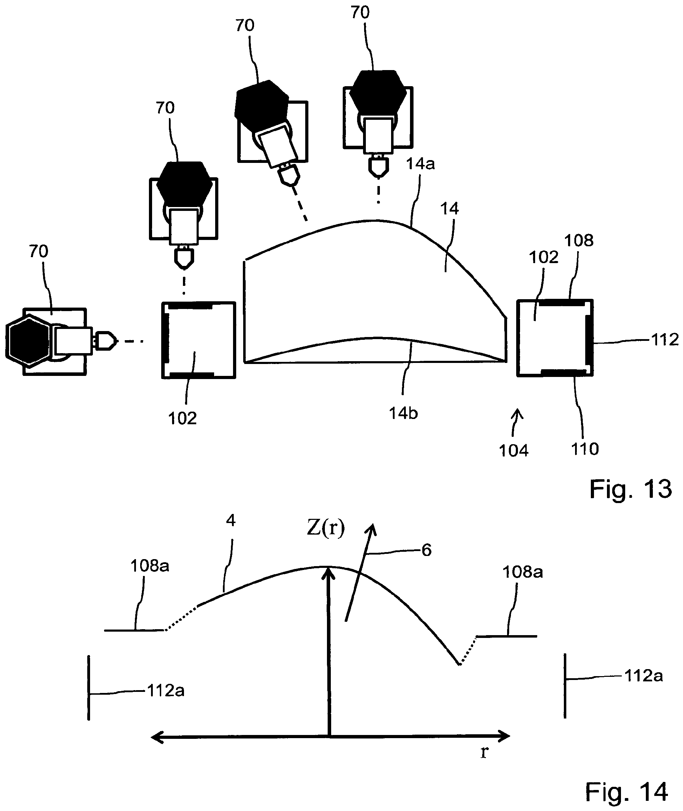

- Fig. 13: eine weitere schematische Darstellung der Vorrichtung beim Vermessen einer Linse mit einem veritablen Keilfehler,
- Fig. 14: ein erstes Oberflächenabbild der in der Konfiguration gemäß Fig. 13 vermessenen Linse,

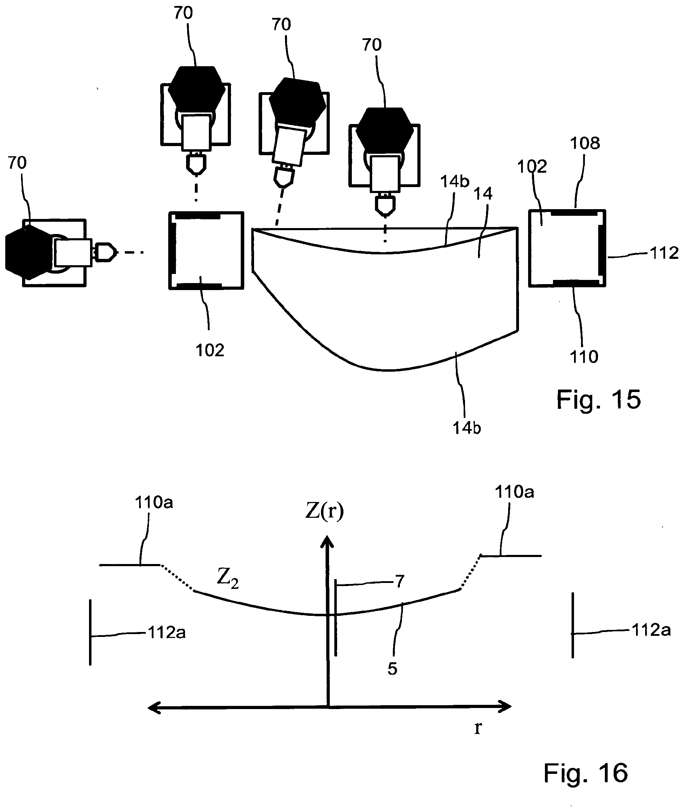

- Fig. 15: eine Darstellung der Konfiguration gemäß Fig. 13, jedoch mit dem in einer anderen Orientierung an der Trägereinrichtung gelagerten Objekthalter,
- Fig. 16: ein der Konfiguration gemäß Fig. 15 entsprechendes Oberflächenabbild,

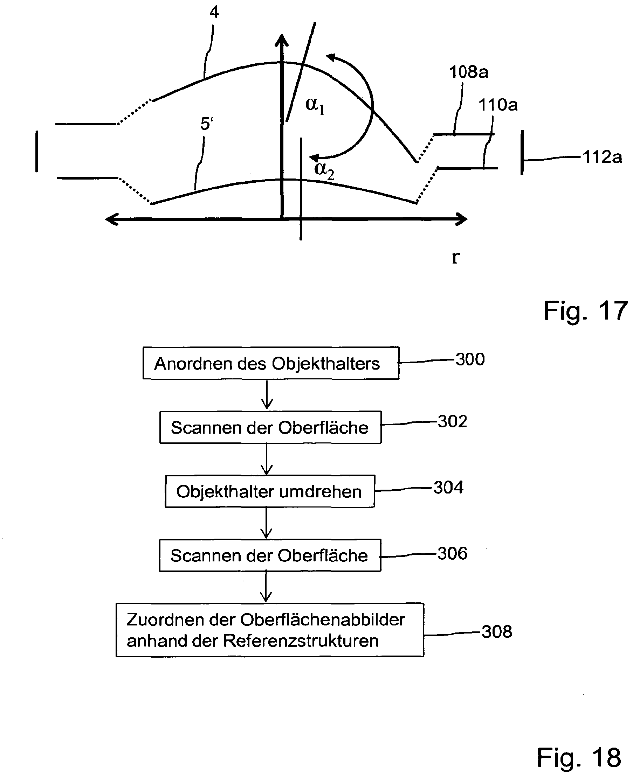

- Fig. 17: eine schematische Darstellung einer Superposition der beiden in den Fig. gezeigten Oberflächenabbilder zur Ermittlung des Keilfehlers der Linse, und
- Fig. 18: ein Flussdiagramm des Verfahrens zur geometrischen Vermessung eines Objekts.

### Detaillierte Beschreibung

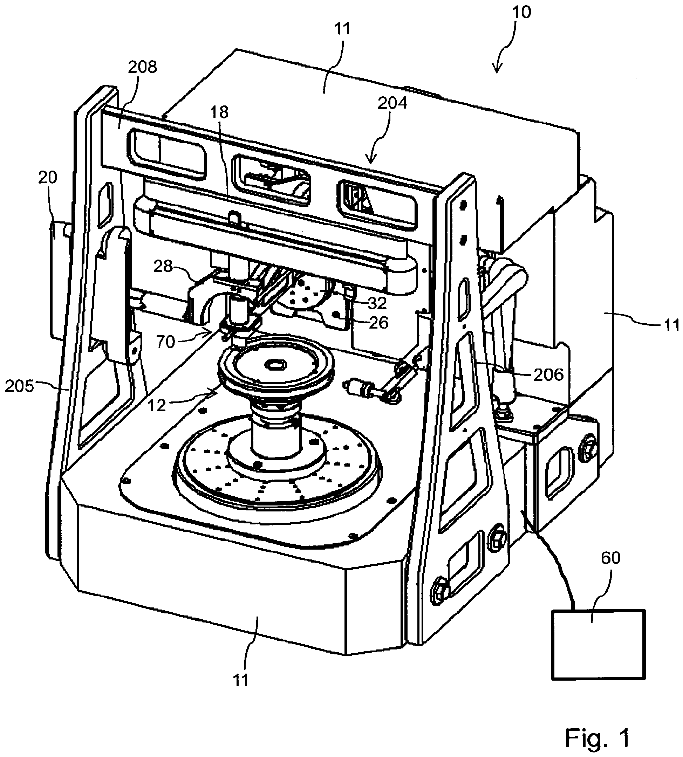

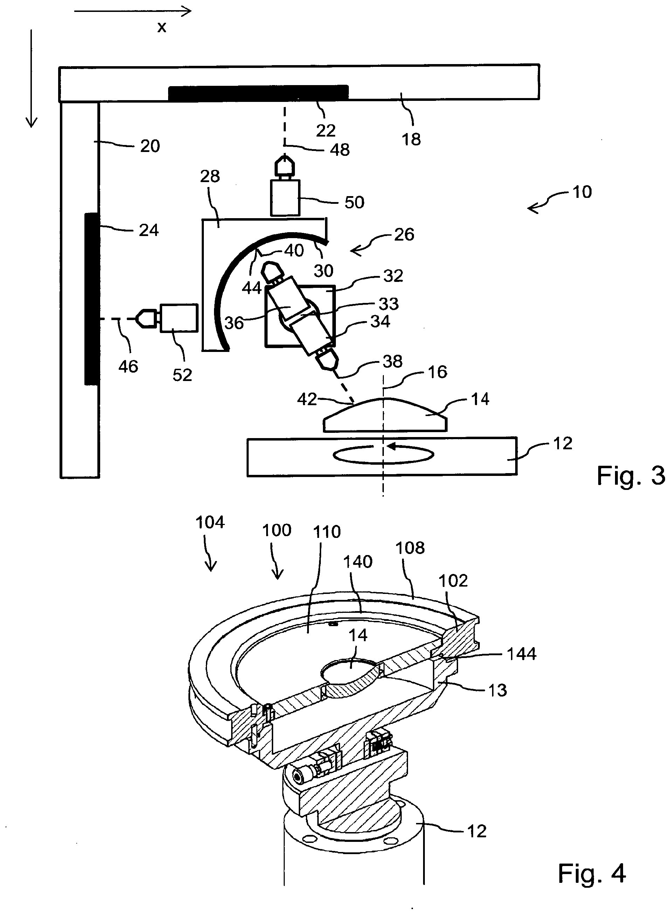

Die in den Figuren 1 bis 3 in unterschiedlichen Darstellungen gezeigte Messvorrichtung 10 weist zwei ortsfeste und zueinander fixierte, vorliegend orthogonal zueinander ausgerichtete Referenzobjekte 18, 20 auf, von denen sich das Referenzobjekt 18 im Wesentlichen in einer ersten Richtung (x) und das zweite Referenzobjekt 20 in einer hierzu senkrechten Richtung (z) erstreckt. An beiden Referenzobjekten 18, 20 sind einzelne Referenzflächen 22, 24 vorgesehen, die typischerweise als Spiegelflächen oder als reflektierende Flächen ausgebildet sind.

Die Vorrichtung 10 weist ferner eine drehbar gelagerte Trägereinrichtung 12 auf, an der ein zu vermessendes Objekt 14, wie zum Beispiel eine optische Komponente, etwa eine Linse 14, anordenbar und fixierbar ist. Der Objektträger 12 und ein hieran lösbar fixierbarer Objekthalter 100 ist dabei um eine Drehachse 16 drehbar gelagert.

Ferner weist die Messvorrichtung 10 einen in der als Messebene bezeichneten x-z-Ebene beweglichen Halter 26 auf, der an der Basis 11 bezüglich der Messebene (x, z) beweglich ist.

Die Messvorrichtung 10 eine Basis 11 und hieran fixiertes Gestell 204 auf, welches die an der Basis angeordnete Trägereinrichtung 12 überspannt und welches eine Messebene (x, z) für eine an der Basis 11 beweglich und verstellbar angeordnete Abstandsmesseinrichtung 70 definiert. Das Gestell 204 weist zwei seitliche Schenkel 205, 206 sowie oberhalb eines der Trägereinrichtung 12 einen sich zwischen den Schenkeln 205, 206 erstreckenden Verbindungsbalken 208 auf. An der Unterseite des Verbindungsbalkens 208 ist eines der Referenzobjekte 18 angeordnet, während an einem der nach oben ragenden Schenkel 205 das zweite Referenzobjekt 20 angeordnet ist. Mittels des Gestells 204 sind die Referenzobjekte 18, 20 ortsfest an der Basis 11 angeordnet.

Der Halter 26 weist eine hier nicht näher bezeichnete Grundplatte auf, an welcher ein Referenzkörper 28 sowie ein Lager 32 zur drehbaren Lagerung zweier Abstandssensoren 34, 36 angeordnet ist. Der Referenzkörper 28 weist eine den Abstandssensoren 34, 36 zugewandte, vorliegend etwa nach Art einer Zylinderinnenwandung ausgebildete Spiegel- oder Referenzfläche 30 auf. Diese ist bevorzugt als Hohlspiegel ausgebildet. Die Kontur der Referenzfläche 30 ist zur Kalibrierung der Messeinrichtung 10 präzise zu vermessen. Die Kontur und die einzelnen auf der Referenzfläche 30 abzutastenden Punkte 44 sind hinsichtlich ihrer Position bekannt und in einer Auswerteeinheit der Steuerung 60 hinterlegt.

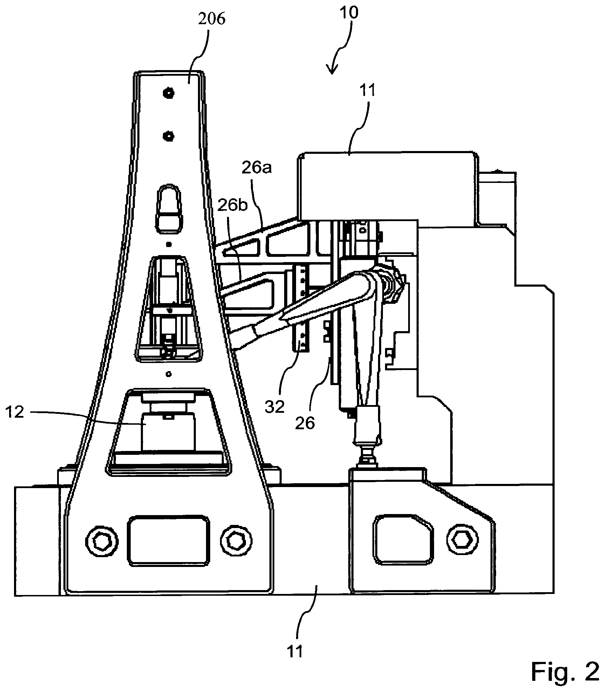

Die Anordnung des Referenzkörpers 28 am Halter 26 erfolgt über einen sich horizontal erstreckenden Ausleger 26a während die Anordnung der Abstandsmesseinrichtung 70 am Halter 26 über einen sich parallel hierzu erstreckenden weiteren, drehbar an der Basis 11 angeordneten Ausleger 26b erfolgt, wie dies in der Seitenansicht der Fig. 2 gezeigt ist.

Die zwei entgegengesetzt ausgerichtete Abstandssensoren 34, 36 aufweisende Abstandsmesseinrichtung 70 ist bezüglich einer Drehachse 33 drehbar am Lager 32 gehalten. Die Drehachse 33 verläuft hierbei bevorzugt orthogonal zu der von den beiden Referenzobjekten 18, 20 aufgespannten Ebene (x, z). Der zum Objekt 14 gerichtete Abstandssensor 34 ist hierbei bevorzugt als Mehrwellenlängen-Sensor ausgebildet, der zur Bestimmung eines absoluten Abstands zu einem ausgewählten ersten Punkt 42 auf der zu vermessenden Oberfläche des Objekts 14 ausgebildet ist.

Die beiden Sensoren 34, 36 sind hierbei zueinander fixiert. Sie sind zudem bezogen auf die Drehachse 33 diametral zueinander ausgerichtet. Eine Veränderung der Ausrichtung des Sensors 34 geht somit stets mit einer entsprechenden Richtungsänderung des Sensors 36 einher.

Der Sensor 34 misst dabei in Reflexionsgeometrie. Das heißt, der auf den Messpunkt 42 gerichtete Messstrahl wird identisch zurückgespiegelt und vom Sensor 34 wieder detektiert und schließlich einer mit dem Sensor 34 gekoppelten, in Fig. 1 angedeuteten Sensor- bzw. Detektionseinheit einer Steuerung 60 zugeführt. Je nach Kontur des zu vermessenden Objekts 14 und der relativen Positionierung des Halters 26 gegenüber dem Objekt 14 ist die Ausrichtung bzw. Orientierung des Sensors 34 zu verändern. Eine Drehung des Abstandssensors 34, 36 um die Drehachse 33 kann jedoch eine Verschiebung des Abstandssensors 34 gegenüber dem Halter 26 mit sich bringen.

Indem der zweite Abstandssensor 36 in einer dem ersten Sensor 34 entgegengesetzten Richtung auf die Referenzfläche 30 des Referenzkörpers 28 ausgerichtet ist, kann eine etwa durch die Drehbewegung der Abstandsmesseinrichtung 70 unweigerlich hervorgerufene Verschiebung in Bezug auf den bekannten Referenzkörper 28 präzise gemessen und im Zuge der elektronischen Auswertung aufgenommener bzw. detektierter Messsignale kompensiert werden.

Erfährt der Sensor 34 etwa rotationsbedingt eine Verschiebung zum Beispiel in Richtung zum Objekt 14, würde dies den zu messenden Abstand 38 verringern. Eine solche Verschiebung würde aber gleichzeitig auch den zweiten Abstand 40, zwischen dem gegenüberliegenden Sensor 36 und der feststehenden Referenzfläche 30 quantitativ um das gleiche Maß vergrößern. Auf diese Art und Weise können etwaige drehbedingte Positionsungenauigkeiten der Abstandsmesseinrichtung 70 präzise vom zweiten Abstandssensor 36 durch Messung eines zweiten Abstands 40 gegenüber einem ausgewählten zweiten Messpunkt 44 auf der Referenzfläche 30 kompensiert werden.

Die Position des Halters 26 gegenüber den Referenzobjekten 18, 20 kann mittels zweier weiterer als Referenzsensoren bezeichneten Abstandssensoren 50, 52 erfolgen, die jeweils den Abstand 48 in z-Richtung bzw. den Abstand 46 in x-Richtung zum jeweiligen Referenzobjekt 18, 20 ermitteln. Auch die Referenzsensoren können dabei als Mehrwellenlängensensoren ausgestaltet sein.

Die Ausrichtung der Abstandssensoren 34, 36 gegenüber der Geometrie bzw. Position des Referenzkörpers 28 ergibt sich durch den zu vermessenden Punkt 42 auf der Oberfläche des Objekts 14. Es ist hierbei denkbar, mittels geeigneter Sensoren und elektromechanischer Stelleinrichtungen den zum Objekt 14 hin gerichteten Abstandssensor 34 stets orthogonal zum jeweiligen Punkt 42 auszurichten. Der hierbei eingestellte Winkel des ersten und/oder des zweiten Abstandssensors 34, 36 kann sodann zur Bestimmung des Abstands 40 Verwendung finden.

Der zu dem vorgegebenen Winkel tatsächlich gemessene Abstandswert 40 kann mit einem im Zuge eines Kalibrierprozesses aufgenommenen Referenzwert verglichen werden. Aus der Abweichung ergibt sich unmittelbar eine Längenkorrektur für den gemessenen Abstand 38.

In den Fig. 5 bis 7 ist der an der Trägereinrichtung 12 drehbare Objekthalter 100 schematisch gezeigt. Der Objekthalter 100 weist einen umlaufend geschlossenen Referenzring 102 auf. Der Referenzring 102 weist eine Oberseite 104 und der Oberseite 104 abgewandt eine Unterseite 106 auf. An der Oberseite 104 ist, wie in Fig. 7 dargestellt, eine umlaufende obere Referenzstruktur 108 ausgebildet. Dementsprechend ist auch an der gegenüberliegenden Unterseite 106 ein umlaufende untere Referenzstruktur 110 ausgebildet. Die Referenzstrukturen 108, 110 können als ringförmige Referenzflächen ausgestaltet sein. Grundsätzliche wäre aber auch die Ausgestaltung als ein Referenzring mit einer vergleichsweise geringen radialen Ausdehnung denkbar.

Radial innenliegend weist der Referenzring 102 einen nach innen ragenden Flansch 114 auf, der der Anordnung eines scheibenartig ausgestalteten Objektträgers 116 dient. Am nach innen ragenden Flansch 114 sind beispielsweise drei äquidistant voneinander angeordnete Befestigungsstellen 120 vorgesehen, die mit entsprechenden Befestigungsstellen 118 des scheibenartigen Objektträgers 116 korrespondieren und dementsprechend mit den Befestigungsstellen 118 des Objektträgers 116 zur Überdeckung bringbar sind. Der Objektträger 116 kann als eine Art Montageadapter für unterschiedlich große und unterschiedlich dicke zu vermessende Objekte 14 fungieren.

Radial mittig weist der hier scheibenartig ausgestaltete Objektträger 116 einen in Form einer Durchgangsöffnung ausgestalteten Aufnahmebereich 124 auf. Eine Öffnungsberandung des Aufnahmebereichs 124 ist ferner mit einem radial nach innen ragenden Flansch 128 versehen, wie dies aus dem Querschnitt der Fig. 6 hervorgeht. Weiterhin ist die Öffnungsberandung des Aufnahmebereichs 124 mit einem Innengewinde 126 versehen, in welches ein mit einem entsprechenden Außengewinde 127 versehener Fixierring einschraubbar ist. Zwischen dem Fixierring 130 und dem radial nach innen ragenden Flansch 128 ist das zu vermessende Objekt 14 anordenbar.

Es ist typischerweise mittels des Fixierrings 130 am Objektträger 116 und damit auch am Objekthalter 100 fixierbar. An der Oberseite 104 als auch an der Unterseite 106 des Referenzrings 102 ist jeweils eine Markierung 122 angeordnet, mittels derer der Objekthalter 100 in einer definierten Winkelstellung bezüglich der Drehachse 16 an der Trägereinrichtung 12 anordenbar ist.

Im Übergang zum Objektträger 116 weist der Referenzring 102 eine umlaufende Fase 140 an der Oberseite 104 und eine hierzu korrespondierend bzw. symmetrisch ausgestaltete Fase 142 an der Unterseite 106 auf. Mittels der Fasen 140, 142 ist der Objekthalter 100 typischerweise zentrierend an einem mit einer hiermit korrespondierenden Fase 144 versehenen Lagerelement 13 der Trägereinrichtung 12 in den beiden unterschiedlichen Orientierungen 1, 2 anordenbar.

In der Abfolge der Fig. 8 bis 12 ist das Verfahren zur geometrischen Vermessung des Objekts 14 dargestellt. In der Konfiguration gemäß Fig. 8 ist der Objekthalter 100 in einer ersten Orientierung 1 an der Trägereinrichtung 12 gelagert. Die Oberseite 104 ist hierbei der in drei unterschiedlichen Positionen dargestellten Abstandsmesseinrichtung 70 zugewandt, während die Unterseite 106 der Abstandsmesseinrichtung 70 abgewandt angeordnet ist.

Zur Bestimmung eines in Fig. 9 schematisch gezeigten Oberflächenabbilds 4 wird der Objekthalter 100 bezüglich einer in Fig. 1 skizzierten Drehachse 3 in Rotation versetzt, während der der Oberfläche 14a zugewandte Abstandssensor 34 der in den Fig. 8 und 10 nur schematisch dargestellten Abstandsmesseinrichtung 70 die Oberfläche 14a von radial außen nach radial innen berührungslos abtastet. Im Zuge jener Abtastung wird auch die obere Referenzstruktur 108 an der Oberseite 104 des Referenzrings 102 abgetastet bzw. vermessen. Das so ermittelbare bzw. messbare und in Fig. 9 schematisch dargestellte Oberflächenabbild 4 steht somit in Relation mit einem Abbild 108a der abgetasteten Referenzstruktur 108.

Ein hierzu weitreichend identisches Prozedere wird alsdann wie in den Fig. 10 und 11 dargestellt jeweils mit der Unterseite 106 des Objekthalters 100 durchgeführt. Der Objekthalter 100 wird in seiner zweiten Orientierung 2, vorliegend als umgedreht an der Trägereinrichtung 12 gelagert und abermals bezüglich der Drehachse 3 in Rotation versetzt. In entsprechender Art und Weise tastet auch hier die Abstandsmesseinrichtung 70 die untere Referenzstruktur 110 und anschließend daran die untere Oberfläche 14b des Objekts 14 ab. Hierbei wird ein unteres Oberflächenabbild 5 ermittelt, wie dies in Fig. 10 schematisch wiedergegeben ist. Auch hier steht die gemessene Kontur bzw. Struktur der Oberfläche 14b des Objekts in direktem Bezug zu einem Abbild 110a der unteren Referenzstruktur 110.

Der gestrichelt in den Fig. 9 und 11 wiedergegebene Bereich zwischen den horizontal dargestellten oberen und unteren Abbildern der Referenzstrukturen 108a, 110a und den radial mittigen Bereichen des Oberflächenabbilds 4, 5 entspricht der radialen Ausdehnung des Objektträgers 116 und ist in den schematischen Darstellungen der Fig. 8 und 10 weitreichend ausgeblendet.

In Fig. 12 werden die beiden zuvor aufgenommenen Oberflächenabbilder 4, 5 zueinander in Bezug gesetzt und sozusagen superponiert. Da das in Fig. 11 gezeigte Oberflächenabbild 5 in der zweiten Orientierung 2 des Objekthalters 100 aufgenommen wurde, ist dieses in Fig. 12 vertikal gespiegelt als Oberflächenabbild 5' dargestellt. Die links und rechts außen liegenden gestrichelten Linien zwischen der oberen und der unteren Referenzstruktur 108, 110 stellen die bekannte bzw. zuvor kalibrierte Dicke D des Objekthalters 100 dar.

Aus der Superposition der beiden Oberflächenabbilder 4, 5 gemäß Fig. 12 ist die Dicke d bzw. eine Dickenprofil, beispielsweise als Funktion des Radius des rotationssymmetrischen Objekts 14 präzise bestimmbar.

In der Abfolge gemäß der Fig. 13 bis 17 ist die Ermittlung eines Keilfehlers eines Objekts am Beispiel einer Linse, schematisch gezeigt. Ergänzend zum zuvor zu den Fig. 8 bis 12 beschriebenen Abscannen von Oberseite und Unterseite 104, 106 des Objekthalters 100 ist hier ein ergänzendes Abscannen einer äußeren Referenzstruktur 112 an der radial nach außen gerichteten Außenseite 111 des Referenzrings 102 vorgesehen. Die äußere Referenzstruktur 112 steht in fester und bekannter Beziehung zur oberen und zur unteren Referenzstruktur 108, 110. In der Konfiguration gemäß Fig. 13, in welcher die Oberseite 104 des Objekthalters 100 und des darin angeordneten Objekts 14 vermessen wird, erfolgt auch gleichzeitig oder sequenziell eine Vermessung bzw. ein Abscannen der äußeren Referenzstruktur 112, die im in Fig. 13 dargestellten Oberflächenabbild 4 als Abbild 112a in Form vertikaler Striche gezeigt ist.

Ferner ist im Oberflächenabbild 4 gemäß Fig. 14 eine rechnerisch ermittelte Symmetrieachse 6 der Objektoberfläche 14a dargestellt. Nach einem Invertieren und Umdrehen des Objekthalters 100 wird erneut ein Scannverfahren durchgeführt, wobei wiederum die äußere Referenzstruktur 112 diesmal ergänzend zur unteren Referenzstruktur 110 und zur Unterseite des Objekts 14 abgescannt wird. Es ergibt sich ein weiteres unterseitiges Oberflächenabbild 5, in welchem die äußere Referenzstruktur 112, die untere Referenzstruktur 110 und das Abbild der unteren Oberfläche 14b des Objekts 14 wiedergegeben sind. Ergänzend ist in der Darstellung gemäß Fig. 15 eine rechnerisch ermittelte Symmetrieachse 7 der unteren Oberfläche 14b des Objekts 14 dargestellt.

In Fig. 16 ist abermals eine Superposition der beiden zuvor gesondert in Fig. 14 und Fig. 16 gezeigten Oberflächenabbilder 4, 5 schematisch gezeigt, wobei auch hier das der Unterseite 106 zugeordnete Oberflächenabbild 5 gespiegelt ist. Mittels der äußeren Referenzstruktur 112 sind die beiden gesondert und unabhängig voneinander aufgenommenen Oberflächenabbilder 4, 5 in Radialrichtung, das heißt horizontal bezüglich der Darstellung in Fig. 16 präzise übereinander positionierbar, sodass auch in Radialrichtung (r) eine exakte Zuordnung der Oberflächenabbilder 4, 5' erfolgen kann.

Aus den unterschiedlichen Neigungswinkeln α1, α2 der jeweils zu den Oberflächenabbildern 4, 5 errechneten Symmetrieachsen 6, 7 lässt sich sodann der Keilfehler des Objekts 14 bestimmen.

In Fig. 18 ist schließlich noch der Ablauf des Verfahrens zur geometrischen Vermessung des Objekts 14 schematisch skizziert. In einem ersten Schritt 300 wird der mit dem zu vermessenden Objekt 14 versehen Objekthalter 100 in seiner erste Orientierung 1 an der Trägereinrichtung 12 angeordnet. In einem nachfolgenden Schritt 302 wird die der Abstandsmesseinrichtung 70 zugewandte erste Oberfläche 14a des Objekts 14 und die derselben Seite des Objekthalters 100 liegende obere Referenzstruktur 108 des Objekthalters 100 abgescannt.

In einem weiteren Schritt 304 wird der Objekthalter 100 umgedreht und in seine zweite Orientierung 2 überführt, in welcher die Unterseite 106 des Objekthalters 100 nun der Abstandsmesseinrichtung 70 zugewandt ist. Nachfolgend wird im Schritt 306 entsprechend dem Schritt 302 auch die zweite Oberfläche 14b, mithin die Unterseite des Objekts 14, zusammen mit der unteren Referenzstruktur 110 des Objekthalters 100 mittels der Abstandsmesseinrichtung 70 abgescannt. Es wird hierbei ein zweites Oberflächenabbild 5 erzeugt.

In einem finalen Schritt 308 werden die sukzessive erhaltenen ersten und zweiten Oberflächenabbilder 4, 5 anhand der oberen und unteren Referenzstrukturen 108, 110 einander zugeordnet. Das zu vermessende Objekt kann durch Superposition der Oberflächenabbilder 4, 5 rechnergestützt quasi virtuell nachgebildet und hochpräzise hinsichtlich seines Dickenprofils und hinsichtlich seines Keilfehlers vermessen werden.

Wenngleich die Darstellung gemäß Fig. 1 einen drehbar gelagerten Objekthalter 100 zeigt, sind insbesondere in den schematischen Darstellungen gemäß der Fig. 7 bis 16 auch translatorisch aus der dargestellten Zeichenebene heraus und hineinfahrende Verschiebebewegungen des Objekthalters 100 denkbar. Dies ist insbesondere beispielsweise für die Vermessung von Zylinderlinsen vorgesehen. Anstelle einer drehbaren Lagerung des Objekts 14 kann hier eine schrittweise Verschiebung des Objekts in y-Richtung, d.h. senkrecht zur Ebene des Betrachters sowie senkrecht zur Messebene (x, z) der Abstandsmesseinrichtung 70 erfolgen.

### Bezugszeichenliste

- 1: Orientierung
- 2: Orientierung
- 3: Drehachse
- 4: Oberflächenabbild
- 5: Oberflächenabbild
- 6: Symmetrieachse
- 7: Symmetrieachse
- 10: Vorrichtung
- 11: Basis
- 12: Trägereinrichtung
- 13: Lagerelement
- 14: Objekt
- 14a: Oberfläche
- 14b: Oberfläche
- 16: Drehachse
- 18: Referenzobjekt
- 20: Referenzobjekt
- 22: Referenzfläche
- 24: Referenzfläche
- 26: Halter
- 28: Referenzkörper
- 30: Referenzfläche
- 32: Lager
- 34: Abstandssensor
- 36: Abstandssensor
- 38: Abstand
- 40: Abstand
- 42: Messpunkt
- 44: Messpunkt
- 46: Abstand
- 48: Abstand
- 50: Sensor
- 52: Sensor
- 60: Steuerung
- 70: Abstandsmesseinrichtung
- 100: Objekthalter
- 102: Referenzring
- 104: Oberseite
- 106: Unterseite
- 108: Obere Referenzstruktur
- 108a: Abbild
- 110: Untere Referenzstruktur
- 110a: Abbild
- 112: Äußere Referenzstruktur
- 112a: Abbild
- 114: Flansch
- 116: Objektträger
- 118: Befestigungsstelle
- 120: Befestigungsstelle
- 122: Markierung
- 124: Aufnahmebereich
- 126: Innengewinde
- 127: Außengewinde
- 128: Flansch
- 130: Fixierring
- 140: Fase
- 142: Fase
- 144: Fase
- 204: Gestell
- 205: Schenkel
- 206: Schenkel
- 208: Verbindungsbalken

## Patentansprüche

1. Vorrichtung zur geometrischen Vermessung eines Objekts (14), mit:
- einer Basis (11) und mit einer daran angeordneten Trägereinrichtung (12) für das Objekt (14),
- zumindest einem gegenüber der Basis (11) fixierbaren Referenzobjekt (18, 20) und mit
- zumindest einer optischen und berührungslos ausgestalteten Abstandsmesseinrichtung (70), mittels welcher ein Abstand zwischen dem ortsfesten Referenzobjekt (18, 20) und der dem Referenzobjekt (18, 20) zugewandten Oberfläche (14a, 14b) des Objekts (14) bestimmbar und eine Oberflächenkontur des Objekts (14) in Bezug auf das Referenzobjekt (18, 20) ermittelbar ist, und mit
- einem eine Oberseite (104) und eine Unterseite (106) aufweisenden Objekthalter (100), an welchem das Objekt (14) fixierbar ist, wobei der Objekthalter (100) wahlweise in einer ersten Orientierung (1) und in einer zweiten Orientierung (2) an der Trägereinrichtung (12) anordenbar ist,
- wobei die Abstandsmesseinrichtung (70) und der Objekthalter (100) zum Abscannen der Oberfläche (14a, 14b) des Objekts (14) relativ zueinander beweglich sind und wobei der Objekthalter (100) an seiner Oberseite (104) und an seiner Unterseite (106) jeweils eine der Relativbewegung von Objekthalter (100) und Abstandsmesseinrichtung (70) korrespondierende Referenzstruktur (108, 110) aufweist,
- eine Steuerung (60), mittels welcher die einander gegenüberliegenden an Oberseite (104) und Unterseite (106) des Objekthalters (100) vorgesehenen und mittels der Abstandsmesseinrichtung (70) abgescannten Oberflächen (14a, 14b) des Objekts (14) mittels der mit den Objektoberflächen (14a, 14b) abgescannten oberen und unteren Referenzstrukturen (108, 110) einander zuordenbar und aus einer wechselseitigen Zuordnung von erstem und zweitem Oberflächenabbild (4, 5) der Oberflächen zumindest die Dicke des Objekts (14) und/oder ein Keilfehler des Objekts (14) ermittelbar ist.

2. Vorrichtung nach Anspruch 1, wobei der Objekthalter (100) außerhalb eines Aufnahmebereichs (124) für das Objekt (14) an seiner Oberseite (104) eine obere Referenzstruktur (108) und an seiner Unterseite (106) eine untere Referenzstruktur (110) aufweist.

3. Vorrichtung nach Anspruch 2, wobei die obere Referenzstruktur (108) zusammen mit der an der Oberseite (104) des Objekthalters (100) vorgesehenen Oberfläche (14a) des Objekts (14) und die untere Referenzstruktur (110) zusammen mit der an der Unterseite (106) des Objekthalters (100) vorgesehenen Oberfläche (14b) des Objekts (14) abscannbar ist.

4. Vorrichtung nach einem der vorhergehenden Ansprüche, wobei der Objekthalter (100) zwischen seiner Oberseite (104) und seiner Unterseite (106) eine von außen zugängliche äußere Referenzstruktur (112) aufweist.

5. Vorrichtung nach einem der vorhergehenden Ansprüche, wobei die Abstandsmesseinrichtung (70) relativ zu zumindest einem von Referenzobjekt (18, 20) und Trägereinrichtung (12) in einer Ebene (x, z) beweglich ist.

6. Vorrichtung nach einem der vorhergehenden Ansprüche, wobei der Objekthalter (100) drehbar an der Trägereinrichtung (12) gelagert ist.

7. Vorrichtung nach einem der vorhergehenden Ansprüche, wobei der Objekthalter (100) linear translatorisch an der Trägereinrichtung (12) gelagert ist.

8. Vorrichtung nach einem der vorhergehenden Ansprüche, wobei die Abstandsmesseinrichtung (70) einen gegenüber dem Referenzobjekt (18, 20) beweglichen Halter (26) aufweist, an welchem ein Referenzkörper (28), ein erster Abstandssensor (34) und ein zweiter Abstandssensor (36) angeordnet sind, wobei der erste und der zweite Abstandssensor (34, 36) relativ zum Referenzkörper (28) drehbar gelagert sind.

9. Vorrichtung nach Anspruch 8, wobei zumindest ein als Abstandssensor ausgestalteter Referenzsensor (46, 48) am Halter (26) angeordnet ist, mittels welchem ein Abstand (46, 48) und/oder eine Ausrichtung des Halters (26) relativ zum Referenzobjekt (18, 20) bestimmbar ist.

10. Verfahren zur geometrischen Vermessung eines Objekts (14) mittels einer Vorrichtung nach einem der vorhergehenden Ansprüche, mit den Schritten:
- Anordnen des mit einem zu vermessenden Objekt (14) versehenen Objekthalters (100) in einer ersten Orientierung (1) an der Trägereinrichtung (12),
- Abscannen einer ersten Oberfläche (14a) des Objekts (14) und einer oberen Referenzstruktur (108) des Objekthalters (100) mittels der Abstandsmesseinrichtung (70) und Erzeugen eines ersten Oberflächenabbilds (4)
- Anordnen des Objekthalters (100) in einer zweiten Orientierung (2) an der Trägereinrichtung (12),
- Abscannen einer zweiten Oberfläche (14b) des Objekts (14) und einer unteren Referenzstruktur (110) des Objekthalters (100) mittels der Abstandsmesseinrichtung (70) und Erzeugen eines zweiten Oberflächenabbilds (5),
- Zuordnen des ersten und des zweiten Oberflächenabbilds (4, 5) anhand der oberen und unteren Referenzstrukturen (108, 110),
- wobei aus einer wechselseitigen Zuordnung von erstem und zweitem Oberflächenabbild (4, 5) zumindest die Dicke des Objekts (14) und/oder ein Keilfehler des Objekts (14) ermittelt wird.

11. Verfahren nach Anspruch 10, wobei das Abscannen von einer von erster und zweiter Oberfläche (14a, 14b) und von einer jeweils zugehörigen Referenzstruktur (108, 110) zeitlich nacheinander mit der Abstandsmesseinrichtung (70) erfolgt.

12. Verfahren nach einem der vorhergehenden Ansprüche 10 oder 11, wobei zumindest eine von oberer und unterer Referenzstruktur (108, 110) oder zumindest eine der Oberflächen (14a, 14b) des Objekts (14) mit einer äußeren Referenzstruktur (112) des Objekthalters (100) abgescannt wird.

13. Verfahren nach einem der vorhergehenden Ansprüche 10 bis 12, wobei das Abscannen von zumindest einer Referenzstruktur (108, 110, 112) und von zumindest einer Oberfläche (14a, 14b) des Objekts (14) mit derselben Abstandsmesseinrichtung (70) erfolgt.

14. Computerprogramm zur geometrischen Vermessung eines Objekts (14) mittels einer Vorrichtung nach einem der vorhergehenden Ansprüche 1 bis 9, mit:
- Programmmitteln zum Abscannen einer ersten Oberfläche (14a) des Objekts (14) und einer oberen Referenzstruktur (108) des in einer ersten Orientierung (1) an der Trägereinrichtung (12) angeordneten Objekthalters (100) und zur Erzeugung eines ersten Oberflächenabbilds (4) des Objekts (14),
- Programmmitteln zum Abscannen einer zweiten Oberfläche (14b) des Objekts (14) und einer unteren Referenzstruktur (110) des in einer zweiten Orientierung (2) an der Trägereinrichtung (12) angeordneten Objekthalters (100) und zur Erzeugung eines zweiten Oberflächenabbilds (5) des Objekts (14), und
- Programmmitteln zum Zuordnen des ersten und des zweiten Oberflächenabbilds (4, 5) anhand der oberen und unteren Referenzstrukturen (108, 110), und
- Programmmittel zur Ermittlung der Dicke des Objekts (14) und/oder zur Ermittlung eines Keilfehlers des Objekts (14) aus der wechselseitigen Zuordnung von erstem und zweitem Oberflächenabbild (4, 5).

## Claims

1. Apparatus for the geometric measurement of an object (14), comprising:
- a base (11) and comprising a carrier device (12) arranged thereon for the object (14),
- at least one reference object (18, 20) which is fixable in relation to the base (11) and comprising
- at least one optical and contactlessly configured distance measuring device (70), by means of which a distance between the stationary reference object (18, 20) and the surface (14a, 14b) of the object (14) facing the reference object (18, 20) is determinable and a surface contour of the object (14) in relation to the reference object (18, 20) is ascertainable, and comprising
- an object holder (100) having an upper side (104) and a lower side (106), the object being fixable to said object holder, wherein the object holder (100) is selectively arrangeable with a first orientation (1) and with a second orientation (2) on the carrier device (12),
- wherein the distance measuring device (70) and the object holder (100) are movable relative to one another for the purposes of scanning the surface (14a, 14b) of the object (14) and wherein the object holder (100) in each case has a reference structure (108, 110) on the upper side (104) thereof and on the lower side (106) thereof, said reference structure corresponding to the relative movement between object holder (100) and the distance measuring device (70),
- a controller (60), by means of which the surfaces (14a, 14b) of the object (14) which are provided lying opposite one another at the upper side (104) and lower side (106) of the object holder (100) and scanned by means of the distance measuring device (70) are assignable to one another by means of the upper and lower reference structures (108, 110) scanned with the object surfaces (14a, 14b) and at least the thickness of the object (14) and/or a wedge error of the object (14) is ascertainable from a reciprocal assignment of the first surface image (4) and second surface image (5) of the surfaces.

2. Apparatus according to Claim 1, wherein, outside of a receptacle region (124) for the object (14), the object holder (100) has an upper reference structure (108) on the upper side (104) thereof and a lower reference structure (110) on the lower side (106) thereof.

3. Apparatus according to Claim 2, wherein the upper reference structure (108) is scannable together with the surface (14a) of the object (14) provided at the upper side (104) of the object holder (100) and the lower reference structure (110) is scannable together with the surface (14b) of the object (14) provided at the lower side (106) of the object holder (100).

4. Apparatus according to one of the preceding claims, wherein the object holder (100) has an outer reference structure (112), accessible from the outside, between the upper side (104) thereof and the lower side (106) thereof.

5. Apparatus according to one of the preceding claims, wherein the distance measuring device (70) is movable relative to reference object (18, 20) and/or carrier device (12) in a plane (x, z).

6. Apparatus according to one of the preceding claims, wherein the object holder (100) is rotatably mounted on the carrier device (12).

7. Apparatus according to one of the preceding claims, wherein the object holder (100) is mounted on the carrier device (12) in a linear translational manner.

8. Apparatus according to one of the preceding claims, wherein the distance measuring device (70) comprises a holder (26) which is movable in relation to the reference object (18, 20) and on which a reference body (28), a first distance sensor (34) and a second distance sensor (36) are arranged, wherein the first distance sensor (34) and the second distance sensor (36) are rotatably mounted relative to the reference body (28).

9. Apparatus according to Claim 8, wherein at least one reference sensor (46, 48) configured as a distance sensor is arranged on the holder (26), a distance (46, 48) and/or an alignment of the holder (26) relative to the reference object (18, 20) being determinable by means of said reference sensor.

10. Method for the geometric measurement of an object (14) by means of an apparatus according to one of the preceding claims, said method comprising the following steps:
- arranging the object holder (100) provided with an object (14) to be measured on the carrier device (12) with a first orientation (1),
- scanning a first surface (14a) of the object (14) and an upper reference structure (108) of the object holder (100) by means of the distance measuring device (70) and producing a first surface image (4),
- arranging the object holder (100) on the carrier device (12) with a second orientation (2),
- scanning a second surface (14b) of the object (14) and a lower reference structure (110) of the object holder (100) by means of the distance measuring device (70) and producing a second surface image (5),
- assigning the first surface image (4) and the second surface image (5) on the basis of the upper reference structure (108) and lower reference structure (110),
- wherein at least the thickness of the object (14) and/or a wedge error of the object (14) is ascertained from a reciprocal assignment of the first surface image (4) and second surface image (5).

11. Method according to Claim 10, wherein the scanning either of first surface (14a) and second surface (14b) and of a respectively associated reference structure (108, 110) is carried out successively in time using the distance measuring device (70).

12. Method according to either of the preceding Claims 10 and 11, wherein upper and/or lower reference structure (108, 110) or at least one of the surfaces (14a, 14b) of the object (14) is scanned with an outer reference structure (112) of the object holder (100).

13. Method according to one of the preceding Claims 10 to 12, wherein the scanning of at least one reference structure (108, 110, 112) and of at least one surface (14a, 14b) of the object (14) is carried out with the same distance measuring device (70).

14. Computer program for the geometric measurement of an object (14) by means of an apparatus according to one of the preceding Claims 1 to 9, said computer program comprising:
- program means for scanning a first surface (14a) of the object (14) and an upper reference structure (108) of the object holder (100) arranged with a first orientation (1) on the carrier device (12), and for producing a first surface image (4) of the object (14),
- program means for scanning a second surface (14b) of the object (14) and a lower reference structure (110) of the object holder (100) arranged with a second orientation (2) on the carrier device (12), and for producing a second surface image (5) of the object (14), and
- program means for assigning the first surface image (4) and the second surface image (5) on the basis of the upper reference structure (108) and lower reference structure (110), and
- program means for ascertaining the thickness of the object (14) and/or for ascertaining a wedge error of the object (14) from the reciprocal assignment of the first surface image (4) and second surface image (5).

## Revendications

1. Arrangement de mesurage géométrique d'un objet (14), comprenant :
- une base (11) et un dispositif porteur (12) disposé sur celle-ci pour l'objet (14),
- au moins un objet de référence (18, 20) qui peut être immobilisé par rapport à la base (11) et comprenant
- au moins un dispositif de mesure d'écart (70) de configuration optique et sans contact, au moyen duquel peut être déterminé un écart entre l'objet de référence (18, 20) fixe et la surface (14a, 14b) de l'objet (14) qui fait face à l'objet de référence (18, 20) et peut être identifié un contour de surface de l'objet (14) par rapport à l'objet de référence (18, 20), et comprenant
- un porte-objet (100) qui possède un côté supérieur (104) et un côté inférieur (106), sur lequel l'objet (14) peut être immobilisé, le porte-objet (100) pouvant être disposé au choix dans une première orientation (1) et dans une deuxième orientation (2) sur le dispositif porteur (12),
- le dispositif de mesure d'écart (70) et le porte-objet (100) étant mobiles l'un par rapport à l'autre en vue de balayer la surface (14a, 14b) de l'objet (14) et le porte-objet (100) possédant respectivement sur son côté supérieur (104) et son côté inférieur (106) une structure de référence (108, 110) correspondant au mouvement relatif du porte-objet (100) et du dispositif de mesure d'écart (70),
- une commande (60), au moyen de laquelle les surfaces (14a, 14b) de l'objet (14), présentes de manière opposée l'une à l'autre sur le côté supérieur (104) et le côté inférieur (106) du porte-objet (100) et balayées au moyen du dispositif de mesure d'écart (70), peuvent être affectées l'une à l'autre au moyen des structures de référence (108, 110) supérieure et inférieure balayées avec les surfaces d'objet (14a, 14b) et au moins l'épaisseur de l'objet (14) et/ou une erreur de coin de l'objet (14) peut être déterminée à partir de l'affectation mutuelle de la première et de la deuxième image de surface (4, 5) des surfaces.

2. Arrangement selon la revendication 1, le porte-objet (100) possédant, en-dehors d'une zone d'accueil (124) pour l'objet (14), une structure de référence supérieure (108) sur son côté supérieur (104) et une structure de référence inférieure (110) sur son côté inférieur (106).

3. Arrangement selon la revendication 2, la structure de référence supérieure (108) pouvant être balayée conjointement avec la surface (14a) de l'objet (14) qui se trouve sur le côté supérieur (104) du porte-objet (100) et la structure de référence inférieure (110) pouvant être balayée conjointement avec la surface (14b) de l'objet (14) qui se trouve sur le côté inférieur (106) du porte-objet (100).

4. Arrangement selon l'une des revendications précédentes, le porte-objet (100) possédant, entre son côté supérieur (104) et son côté inférieur (106), une structure de référence externe (112) accessible depuis l'extérieur.

5. Arrangement selon l'une des revendications précédentes, le dispositif de mesure d'écart (70) pouvant se déplacer dans un plan (x, z) par rapport à au moins l'un parmi l'objet de référence (18, 20) et le dispositif porteur (12).

6. Arrangement selon l'une des revendications précédentes, le porte-objet (100) étant supporté en rotation sur le dispositif porteur (12).

7. Arrangement selon l'une des revendications précédentes, le porte-objet (100) étant supporté en translation linéaire sur le dispositif porteur (12).

8. Arrangement selon l'une des revendications précédentes, le dispositif de mesure d'écart (70) possédant un élément de maintien (26) mobile par rapport à l'objet de référence (18, 20), sur lequel sont disposés un corps de référence (28), un premier capteur d'écart (34) et un deuxième capteur d'écart (36), le premier et le deuxième capteur d'écart (34, 36) étant montés à rotation par rapport au corps de référence (28).

9. Arrangement selon la revendication 8, au moins un capteur de référence (46, 48) réalisé sous la forme d'un capteur d'écart étant disposé sur l'élément de maintien (26), au moyen duquel peut être déterminé un écart (46, 48) et/ou une orientation de l'élément de maintien (26) par rapport à l'objet de référence (18, 20).

10. Procédé de mesurage géométrique d'un objet (14) au moyen d'un arrangement selon l'une des revendications précédentes, comprenant les étapes suivantes :
- disposition du porte-objet (100) pourvu d'un objet (14) à mesurer dans une première orientation (1) sur le dispositif porteur (12),
- balayage d'une première surface (14a) de l'objet (14) et d'une structure de référence supérieure (108) du porte-objet (100) au moyen du dispositif de mesure d'écart (70) et génération d'une première image de surface (4),
- disposition du porte-objet (100) dans une deuxième orientation (2) sur le dispositif porteur (12),
- balayage d'une deuxième surface (14b) de l'objet (14) et d'une structure de référence inférieure (110) du porte-objet (100) au moyen du dispositif de mesure d'écart (70) et génération d'une deuxième image de surface (5),
- affectation de la première et de la deuxième image de surface (4, 5) à l'aide des structures de référence supérieure et inférieure (108, 110),
- au moins l'épaisseur de l'objet (14) et/ou une erreur de coin de l'objet (14) étant déterminée à partir d'une affectation mutuelle de la première et de la deuxième image de surface (4, 5).

11. Procédé selon la revendication 10, le balayage de l'une parmi la première et la deuxième surface (14a, 14b) et d'une structure de référence (108, 110) respectivement associée s'effectuant chronologiquement l'un après l'autre avec le dispositif de mesure d'écart (70).

12. Procédé selon l'une des revendications précédentes 10 ou 11, au moins l'une parmi la structure de référence supérieure et inférieure (108, 110) ou au moins l'une des surfaces (14a, 14b) de l'objet (14) étant balayée avec une structure de référence externe (112) du porte-objet (100).

13. Procédé selon l'une des revendications précédentes 10 à 12, le balayage d'au moins une structure de référence (108, 110, 112) et d'au moins une surface (14a, 14b) de l'objet (14) étant effectué avec le même dispositif de mesure d'écart (70).

14. Programme informatique destiné au mesurage géométrique d'un objet (14) au moyen d'un arrangement selon l'une des revendications précédentes 1 à 9, comprenant :
- des moyens de programme destinés à balayer une première surface (14a) de l'objet (14) et une structure de référence supérieure (108) du porte-objet (100) disposé dans une première orientation (1) sur le dispositif porteur (12) et à générer une première image de surface (4) de l'objet (14),
- des moyens de programme destinés à balayer une deuxième surface (14b) de l'objet (14) et une structure de référence inférieure (110) du porte-objet (100) disposé dans une deuxième orientation (2) sur le dispositif porteur (12) et à générer une deuxième image de surface (5) de l'objet (14), et
- des moyens de programme destinés à affecter la première et la deuxième image de surface (4, 5) à l'aide des structures de référence supérieure et inférieure (108, 110), et
- des moyens de programme destinés à déterminer l'épaisseur de l'objet (14) et/ou à déterminer une erreur de coin de l'objet (14) à partir de l'affectation mutuelle de la première et de la deuxième image de surface (4, 5).
